# EUROPEAN PATENT APPLICATION

(11) **EP 3 852 062 A1**
(43) Date of publication of application: **21.07.2021**
(21) Application number: 20152624.1
(22) Date of filing: 20.01.2020
(51) Int. Cl.: G06T 7/149, G06T 7/00

(54) **SEGMENTING AN OBJECT IN AN IMAGE**

(71) Applicant: Koninklijke Philips N.V., 5656 AG Eindhoven (NL)
(72) Inventor: LENGA, Matthias, 5656 AE Eindhoven (NL); BUERGER, Christian, 5656 AE Eindhoven (NL); KLINDER, Tobias, 5656 AE Eindhoven (NL); VON BERG, Jens, 5656 AE Eindhoven (NL); FRANZ, Astrid Ruth, 5656 AE Eindhoven (NL); LORENZ, Cristian, 5656 AE Eindhoven (NL)
(74) Representative: Philips Intellectual Property & Standards

(57) **Abstract**

The invention relates to an apparatus for segmenting an object, e.g. anatomical structure, in an image, e.g. CT-image. The apparatus (110) comprises a) an image providing unit (111), b) a model providing unit (112) for providing a deformable surface model, c) an neural network providing unit (113) for providing a neural network being adapted to determine secondary information being indicative of a position and/or shape of the object based on the image, d) a secondary information determination unit (114) for determining the secondary information based on the image and the artificial neural network, e) an object model adapting unit (115) for adapting the object model based on the secondary information and on the image. This allows to combine global information provided by the secondary information with local information provided by the image during the model based segmentation to increase the accuracy and reliability of the segmentation process.

## Description

### FIELD OF THE INVENTION

The invention relates to an image segmentation apparatus, method and computer program for segmenting an object in an image. The invention relates further to an imaging system comprising the image segmentation apparatus.

### BACKGROUND OF THE INVENTION

For segmenting anatomical structures in a medical image often model-based segmentation techniques are used. Such model-based segmentation techniques provide a general surface model of an anatomical structure that should be segmented, wherein the general surface model is then adapted in a model-based segmentation algorithm to fit to the anatomical structures of an individual patient presented, for instance, in a 3D CT image. Typically, these model-based segmentation techniques work hierarchically in a coarse-to-fine manner, wherein first the model position and orientation is roughly aligned with a target anatomy using, for example, a generalized Hough transform. In subsequent steps the model is then deformed in order to adapt the model to the specific target anatomy, in particular, to the individual shape of the target anatomy of the patient as provided by the image. For the deformation steps such an algorithm can use an external energy term that attracts the surface of the model to a specific structure provided in the image, while an internal energy term can be provided to punish large deviations from the general shape of the surface model. In most cases such a model-based segmentation technique provides good results, i.e. allows for accurate segmentation of the anatomical structure. However, since model-based segmentation algorithms generally only consider the direct surrounding of the anatomical structure that should be segmented, in cases in which the boundaries of an anatomical structure are not clearly defined in the image of the anatomical structure, the model-based segmentation algorithm might adapt the surface model to the wrong object boundaries in the image which can lead to an inaccurate segmentation result or even to a complete failure of the segmentation process.

### SUMMARY OF THE INVENTION

It is an object of the present invention to provide an image segmentation apparatus, a method and a computer program, which allow for a more accurate and reliable segmentation of an object, in particular, an anatomical structure in an image.

In a first aspect of the present invention an image segmentation apparatus for segmenting an object in an image is presented, wherein the apparatus comprises a) an image providing unit for providing an image of the object, b) a model providing unit for providing an object model referring to a deformable surface model of the object for being adapted to the surface of the object shown in the image, c) an artificial neural network providing unit for providing an artificial neural network being adapted to determine secondary information on the object based on the image of the object, wherein the secondary information is indicative of a position and/or shape of the object in the image, d) a secondary information determination unit for determining the respective secondary information based on the image and the artificial neural network, and e) an object model adapting unit for adapting the object model to the object in the image for segmenting the object, wherein the adaptation of the object model is based on the secondary information and on the image.

Since for adapting the deformable surface model, i.e. object model, to the object in the image the object model adapting unit takes into account not only the information provided by the image itself but also the secondary information determined by the artificial neural network, segmentation difficulties of the image like unclear anatomical structure boundaries can be resolved during the adaptation of the object model by taking into account the secondary information. In particular, the artificial neural network allows to determine the secondary information by taking into account a global context of the object in the image. This allows to combine the global information provided by the secondary information with the local information provided by the image during the model based segmentation to increase the accuracy and reliability of the segmentation process.

The image providing unit can be a storing unit, in which the image of the object is stored and from which the image can be retrieved for providing the same. The image providing unit can also be a receiving unit for receiving an image of the object and for providing the received image. Moreover, the image providing unit can be an image generation unit being adapted to determine the image based on raw image data of the object. The image providing unit can also be an entire imaging system being adapted to acquire the raw image data and to determine, in particular, to reconstruct the image based on the raw image data.

The image providing unit is adapted to provide an image of an object, wherein the object preferably refers to an anatomical structure of a living being like a human or an animal. The anatomical structure can be an organ, or a part of an organ of a living being, a bone, part of a bone or a system of bones, like a spine, or can be any other clearly definable tissue structure or combination of tissue structures in a living being. Preferably, the image provided of the anatomical structure is a medical image like an x-ray CT image, a magnetic resonance tomography image, a fluoroscopy image, et cetera. However, the object can also be an inanimate object or a structure in an inanimate object, for instance, in a security application setting. The provided image can be a 2D image, a 3D image or even a 4D image, i.e. an image showing changes of the object with time.

The object model providing unit can be a storing unit, in which the object model is stored already and from which the object model can be retrieved for providing the same. The object model providing unit can also be a receiving unit for receiving an object model and for providing the received object model. The object model can be received, for instance, by providing the object model as user input. Moreover, the object model providing unit can also be an object model determination unit for determining the object model, for instance, based on stored similar cases, etc.

The object model providing unit is adapted to provide a deformable surface model as object model of the object for being adapted to the surface of the object shown in the image. The deformable surface model refers to a model of a surface of the object and can be a 2D, 3D or 4D model of the surface of the object. In case of a 2D model the surface refers to the 1D boundaries of the object. In particular, the object model is provided with the same dimension as the provided image, e.g. if the image is a 2D image also the object model is provided as a 2D model. However, the object model can also be derived from a higher dimensional model, e.g. a 2D model can be derived from a 3D or 4D object model.

The deformable surface model can be provided, for instance, based on a large database of different deformable surface models for different objects. In particular, deformable surface models can be generated based on the general mean shape of the surface of a specific type of object. For instance, if the object is an anatomical structure, the object model can be based on a general shape of a respective anatomical structure in the general population or in a part of the general population. For instance, different deformable surface models can be provided for application to individuals of a population that are not-fully grown and individuals of a population that are fully grown based on the mean shape of the anatomical structure in not-fully grown and in fully grown individuals, respectively. The object model providing unit can then be adapted to select the object model for a database based on additional information on the patient, for instance, the age or weight of the patient. However, the object model can also be predetermined or can be selected by a user.

Preferably, the provided deformable object model is a smooth triangulated surface mesh model of the object. However, the surface model can also be another mesh model, in which surface elements are not triangulated but comprise a different shape.

The artificial neural network providing unit can be a storing unit, on which an artificial neural network is stored already, and can be adapted to provide the same. In particular, the artificial neural network providing unit can also be a selecting unit for selecting an artificial neural network from a plurality of stored artificial neural networks, for instance, based on the object that should be segmented. Moreover, the artificial neural network providing unit can also be a receiving unit for receiving a selected artificial neural network, wherein the artificial neural network has been selected by a user or by another unit.

The artificial neural network providing unit is adapted to provide an artificial neural network that is adapted to determine secondary information based on an image of an object. In particular, the artificial neural network is adapted to only use the image as input for determining the secondary information. Moreover, the artificial neural network is preferably adapted to determine the secondary information by taking into account image characteristics of the image that reflect a global context of the object. These image characteristics reflecting a global context of the object refer to any kind of image feature that is indicative of the general, i.e. global, context of the object. For instance, knowledge of a general global surrounding and of structures generally found near or far away from the object in the image can be provided as part of the setting of the neural network. If the object refers to an anatomical structure the artificial neural network is preferably adapted to determine the secondary information by taking into account image characteristics of the image that reflect a global anatomical context of the object. For instance, the image characteristics can refer to image features showing anatomical structures surrounding the object that allow to clearly position the object or to distinguish between the boundaries of different anatomical structures. In a concrete example, if the object refers to a vertebra of the spine of a human being, the artificial neural network can be adapted to take into account image characteristics indicating the position of all the other vertebrae shown in the image or the image characteristics indicative of the intervertebral discs. Moreover, the image characteristics can also refer to parts of the rib cage shown in the image or parts of other organs like the lung or the heart shown in the image as global anatomical context of the vertebrae that should be segmented. Based on these image characteristics reflecting the global anatomical context of the object, for instance, the vertebra, the artificial neural network can very accurately determine the secondary information that is indicative of the position and/or shape of the object. With respect to the above concrete example of the object being a vertebra, the artificial neural network can also take into account the number of vertebrae above and below the vertebrae that should be segmented and can also take into account knowledge about organs that are generally found near the vertebrae to determine a very likely position and/or shape of the vertebrae.

Taking into account the global image context of the object can be achieved, for instance, by providing an artificial neural network that uses the concept of hierarchically organized receptive fields. This concept can be implemented, for instance, by defining a hierarchy of regions of the image to which parts of the artificial neural network respond, wherein a first part, e.g. a first level, of the artificial neural network responds to different parts of the image and a subsequent part, e.g. a subsequent level, of the artificial neural network then combines the result of the first part of the neural network to process more complex and greater parts of the image. Thus, a hierarchy can be achieved by correspondingly choosing the connections of the neurons of the different parts or levels of the neural network. A preferred possibility for implementing the concept of hierarchically organized receptive fields is to provide parts of the artificial neural network that process the image with successively increasing spatial resolution while basing the processing on the results of the previous parts of the artificial neural network. For example, it is preferred that a first part of the artificial neural network is provided that processes the image with a lower resolution than the full resolution of the provided image, for instance, with a resolution of 4 x 4 x 4 mm² for a 3D image, and to provide further a second part of the artificial neural network that processes the image with the full resolution, for instance, with a resolution of 2 x 2 x 2 mm² for a 3D image, based on the results of the first part of the neural network. In such an implementation, the processing with a lower resolution provides a larger receptive field that can take into account the global context of the object in the image. In a preferred example, this first processing provides as result a pre-segmentation of the object in the image. The second or further processing then provides a smaller receptive field taking into account more details and smaller structures of the object in the image. Since the second or further processing is based on the results of the previous processing, the global information having influenced the first processing is not lost and thus becomes part of the final result of the artificial neural network. Generally, the above mentioned parts of the neural network can themselves also be regarded and implemented as "stand-alone" neural networks. Moreover, also other known architectures of artificial neural networks that allow the neural network to take a wider, e.g. global, context into account can be used, for example, multi-resolution architectures that integrate the global context of an image by employing images with different resolutions as input of the neural network.

Generally, the provided neural network is trained using images of an object, wherein the images preferably show not only the object itself and refer to images that are similar to the images that are later provided as input for determining the secondary information. In such a case the neural network will learn to provide the desired output, i.e. in this case the secondary information, taking into account the content of the provided images, that does not only refer to the object itself but can also refer to all structures that are present in the image. Which exact image characteristics reflecting, for instance, the global context of the object, the artificial neural network takes into account during the determination of the secondary information depends strongly on the images used for the training of the artificial neural network, the object, and on the structure of the artificial neural network itself. Moreover, artificial neural networks trained with different images might use different image characteristics and, for instance, a different global context of the object for determining the secondary information due to the difference of the training between the artificial neural networks.

Preferably, the artificial neural network is a convolutional neural network. In a preferred example, the convolutional neural network can be a fully convolutional neural network, in particular, a U-Net. Alternatively, the convolutional neural network can be a multi-resolution network, for example, a F-Net or DeepMedic network.

Generally, the artificial neural network can be trained by providing images that show the object that should be segmented in a general context, for instance, x-ray CT images taken from a plurality of patients showing the object, as input to the neural network and by providing the desired output to the neural network, i.e. by providing the secondary information to the neural network in training. The secondary information for the training cases can be determined automatically, for instance, using any kind of automatically segmentation, positioning or other algorithms, or can be provided by a trained user, like a physician or radiologist, who extracts the desired secondary information from images used as training cases. The artificial neural network can then be trained based on the training cases and the respective desired secondary information of these training cases such that when the artificial neural network is provided with a new case, i.e. a new image of an object, the artificial neural network provides the desired output, i.e. the secondary information for which it has been trained.

The secondary information determination unit is adapted to determine the respective secondary information based on the image and the artificial neural network by providing the image as input to the artificial neural network, wherein the artificial neural network then provides the secondary information as output in accordance with its training. The secondary information is indicative of the position and/or shape of the object in the image. For instance, the secondary information can indicate coordinates of a center of the object or a part of the object and/or can indicate which voxels of the image belong to the object and thus which shape the object has in the image.

The object model adapting unit is then adapted to adapt the object model to the object in the image for segmenting the object. In particular, the object model adapting unit is adapted to adapt the surface of the deformable surface model to fit to the surface of the object as shown in the image. The adaptation of the object model is based on the secondary information provided by the neural network and on the image. In particular, it is preferred that the object model adapting unit is adapted for adapting the object model by deforming the object model based on the secondary information and on the image. However, additionally or alternatively the object model adapting unit can also be adapted for adapting the object model by positioning the object model in the image based on the secondary information and on the image. For example, the object model adapting unit can be adapted to place the object model in the image based on a position provided by the secondary information of the object. Additionally or alternatively, the object model adapting unit can be adapted to deform the object model based on a shape of the object provided by the secondary information. In particular, the object model adapting unit can be adapted to compare the information on the position and/or shape of the object provided by the secondary information and provided by the image itself and can use this comparison for adapting the object model.

Preferably, the image segmentation apparatus uses a model-based segmentation algorithm for adapting the object model to the object based on the secondary information and the image. In particular, the secondary information and the image are provided as input for the model-based segmentation algorithm. In a preferred example, the secondary information is indicative of a position of the object. In this case the secondary information can be integrated into the model-based segmentation algorithm by using the secondary information to determine an initial position of the object model, wherein based on this initial position of the object model the model-based segmentation algorithm can then adapt the object model shape based on the image, i.e. the model-based segmentation algorithm can perform a classic model-based segmentation without further input from the secondary information. Additionally or alternatively, the secondary information can also be taken into account during the adaptation of the shape of the object model. In a preferred case, in which the secondary information comprises shape information of the object, the model-based segmentation algorithm is adapted to search for features, for instance, boundaries, that determine the shape of the object in the image and also in the secondary information, wherein the object model shape is then adapted based on the found features in the image and in secondary information. For example, the algorithm can, use a force term that attracts the surface of the model to an image feature related to the object in the image, and optionally a term that punishes a deviation of the model from the original shape of the model or from known mean shapes of the model for a specific patient group, wherein the algorithm can then further be provided with a term that attracts the object model to features, in particular, positions and/or shapes, of the object provided by the secondary information. However, also other possibilities can be used for incorporating the secondary information into the algorithm based on the exact content of the secondary information and the structure of the used model-based segmentation algorithm. An exemplary model-based segmentation algorithm that can be used and adapted to incorporate the secondary information in the context of the invention, for example, as described above, can be found, in the article "Automatic model-based segmentation of the heart in CT images" by O. Ecabert et.al., IEEE Transactions on Medical Imaging, volume 27, issue 9, pages 1189 to 1201 (2008).

In an embodiment, the artificial neural network is further adapted to determine a confidence score for the secondary information based on the image of the object, wherein the confidence score is indicative for how correct the secondary information indicates the position and/or shape of the object, wherein the secondary information determination unit is further adapted to determine the confidence score for the secondary information based on the artificial neural network and the image, wherein the object model adapting unit is adapted to adapt the object model further based on the confidence score.

The confidence score can refer to a confidence score for the complete secondary information but can also refer to a confidence score provided for each part of the secondary information. For instance, if the secondary information comprises information on the position and shape of the object, a confidence score can be provided for the position and another confidence score can be provided for the shape of the object. However, also a common confidence score can be provided for the position and shape of the object, for instance, by using a mean value of a confidence score for the position and a confidence score for the shape of the object. In another example, if the secondary information comprises information for different parts of the object, for instance, in the form of a probability map, the confidence score can be provided for each of these parts or as a common confidence score for all parts. In particular, if the secondary information comprises voxels, like in case of a probability map as secondary information, a confidence score can be determined for each voxel of the secondary information, as a common confidence score for a cluster of voxels, or as a common confidence score for all voxels of the secondary information.

Generally, the artificial neural network can be trained to provide the confidence score of its output, for instance, by employing a Bayesian deep learning framework trained to provide a mapping of the input, for instance, the image, to an uncertainty map. Moreover, the neural network can be trained to provide confidence scores, for instance, by providing the neural network or a part of the neural network with a plurality of images, the desired output of the neural network for each image, and the actual output of the neural network such that the deviation from the desired output to the actual output can be determined and can be learned by the neural network to be provided as confidence score. Additionally or alternatively, the artificial neural network can learn to determine a confidence score by comparing the secondary information with a predetermined expectation with respect to the object. For instance, if the secondary information indicates a specific position of the object, whereas this specific position is far away from an expected position of the object, that has been, for instance, learned in the training phase of the network and is thus encoded in the parameters of the neural network, the artificial neural network can determine a very low confidence score due to the unexpectedness of the position of the object. However, the artificial neural network can also be trained to use a global context and image characteristics to provide the confidence score. For instance, if the artificial neural network is adapted to determine for each voxel of the image whether the voxel belongs to the object or not, inter alia, based on the grey value of the voxel, the artificial neural network can be adapted to take the result of surrounding voxels into account when determining a confidence for one of the image voxels. For example, if one of the image voxels lies between a voxel that is clearly not part of the object and a voxel that is clearly part of the object according to the determination of the artificial neural network, wherein the in-between-voxel does not show the characteristic image value of the object but also not of the surrounding of the object, the artificial neural network can be adapted to determine as confidence score for this in-between-voxel a confidence of 50% of belonging to the object. In another example for this case, the neural network can take into account knowledge of other structures in the image, that indicate that the in-between voxel belongs to the object or not, and can then determine the confidence based on the confidence that these other structures are correctly determined. In a preferred embodiment, the neural network can be trained to determine an output for each part of the image indicating its affiliation, i.e. the response strength, for a certain object class and to determine the confidence score based on this output. For example, if the output, e.g. response strength, for a voxel of the image for belonging to a respective object class is 0.7 and for another voxel is 0.99, both voxels are determined as belonging to the object class, because both outputs, e.g. response strengths, are above a predetermined response threshold for this object class, for instance, over a threshold of 0.5. However, the neural network can be trained to provide the first voxel with a lower confidence score than the second voxel based on the different outputs, e.g. response strengths.

The object model adapting unit can be adapted to decide whether to use a secondary information or the image information for adapting the model based on the confidence score. For example, if the confidence score for the secondary information or a part of the secondary information is low, the object model adapting unit can be adapted to adapt the object model mainly based on the information provided by the image. However, if the confidence score is high, i.e. there is a high confidence that the secondary information is correct, the object model adapting unit can be adapted to adapt the object model mainly based on the secondary information and to ignore information provided by the image, that contradicts the secondary information. Generally, if not stated otherwise, in this application the term "low" refers to "below a predefined threshold" and the term "high" refers to "above a predefined threshold".

In a preferred embodiment, the object model adapting unit is adapted to adapt the object model based on weighting information on the object provided by the secondary information and the image, respectively, wherein the weights for weighting the information are determined based on the confidence score. For example, the weights can be provided as part of an attraction term attracting the object model to a position and/or shape of the secondary information or to an image characteristic of the image. In particular, if the confidence score is indicative of a low confidence of the secondary information, for instance, if the confidence score lies below a predetermined threshold, the weights can be chosen such that the attraction term referring to the secondary information is only taken into account with a lower weight than the other terms determining the adaptation of the object model, or not taken into account at all. On the other hand, if the confidence score indicates that the confidence is high, for instance, if the confidence score lies above a predetermined threshold, the weights can be chosen such that the attraction term referring to the secondary information is very prominent during the adaptation process or even such that the information provided by the secondary information is preferred over the information provided by the image.

In an embodiment, the secondary information comprises a probability map, wherein the probability map provides information for each part of the image indicative of whether the part of the image belongs to the object. In this embodiment, the artificial neural network has been trained by providing probability maps referring to respective training cases as preferred output to the artificial neural network. Preferably, the probability map is voxel based, i.e. provides for each voxel of the image information on whether this voxel of the image belongs to the object or not. Preferably, for each part of the image also a confidence score as described above is provided that indicates the confidence of whether the part of the image belongs to the object or not.

In a preferred embodiment, the artificial neural network is adapted to determine whether a part of an image belongs to one of a plurality of predetermined object classes and to provide as part of the secondary information a probability map providing information for each part of the image indicative of to which object class this part of the image belongs. The plurality of predetermined object classes comprises at least two classes, wherein one class indicates that a part of the image does not belong to the object and the other class indicates that a part of the image belongs to the object as described above. However, the plurality of predetermined object classes can also comprise additional object classes indicating that a part of the image belongs, for instance, to a specific part of the object. For example, if the object that should be segmented is a complete spine of a human being, different object classes can refer to the different vertebrae classes like the vertebrae belonging to the cervical spine, the thoracic spine, the lumbar spine, et cetera. Moreover, in such a case an object class might also refer to intervertebral discs. However, also other object classes can be defined based on the object that should be segmented and the neural network can be trained to differentiate between those object classes. Preferably, a confidence score is provided for each part of the image, that is indicative of the confidence that this part of the image belongs to the determined object class.

In an embodiment, the secondary information is indicative of a position of at least one predetermined view plane indicative of a predetermined view of the object, wherein the position of the predetermined view plane is indicative of the position and/or shape of the object in the image. Generally, a view plan refers to a sectional view of the image, in particular, in 3D and 4D images. In a 2D image the view plane refers to a view line, i.e. a 1D section through the 2D image. In particular, the view plan can be predetermined by the provided object model. For instance, one or more specific view planes might be defined as part of the object model. In such a case the secondary information can be indicative of a position of at least one of these predetermined view planes of the object model in the image. However, the object model might also be provided without a predetermined view plane, wherein in this case a user might define a view plane, for instance, in the object model that should be used as predetermined view plane. Since the view plane is positioned with respect to the object, the view plane is generally indicative of the position of the object. The predetermined view plane can refer to one of the generally known and used view planes in the context of a specific object. In a concrete example, if the object is a vertebra, a generally used view plane is a view plane substantially parallel to the surfaces of the vertebra endplates and going through the middle of the vertebra. The artificial neural network can then be adapted to provide as secondary information the position of this view plane in the provided image. The object model adapting unit can in this case be adapted to adapt the object model by positioning the object model in the image based on the position of the predetermined view plane. In particular, the position of the predetermined view plane in the object model can be known or can be determined and can then be brought in agreement with the position of the predetermined view plane in the image as provided by the secondary information.

In a preferred embodiment, the secondary information further comprises the view plane itself, i.e. a representation of the view plane. For example, in case of a 3D image, the secondary information can comprise a 2D image representing a sectional view as view plane. This allows to more easily determine the view plane in the object model and to determine when the position of the view plane in the object model is aligned with the position of the view plane in the image. Moreover, in this case the determined shape of the object in the representation of the view plan can also be used for adapting the shape of the object model.

In an embodiment, the secondary information is indicative of a position of at least one predetermined landmark of the object, wherein the landmark refers to a predetermined typical structure of the object. A landmark that should be determined as part of the secondary information by the artificial neural network can be chosen based on a landmark already provided in the object model, wherein the artificial neural network can then be trained accordingly to determine the position of this landmark as part of the secondary information. Also in this case the object model adapting unit can be adapted to adapt the object model by positioning the object model in the image based on the at least one predetermined landmark. For instance, the position of the landmark in the object model can be known or can be determined and can then be brought into agreement with the position of the landmark in the image provided by the secondary information. If the object refers to an anatomical structure, the landmark preferable refers to an anatomical landmark, for instance, a generally known and used landmark for a specific anatomical structure.

Generally, the secondary information can comprise and be indicative of any combination of the above described embodiments. For example, the artificial neural network can be adapted, i.e. trained, to provide secondary information comprising a probability map according to one of the above embodiments, a position of at least one predetermined view plane according to one of the above embodiments and/or a position of at least one predetermined landmark according to one of the above embodiments. Moreover, the secondary information can also provide additional information on the position and shape of the object not referring to a probability map, a position of a view plane or a position of a landmark. For instance, the secondary information can comprise information on the position on a focal point of the object or on different focal points for different parts of the object, respectively. The object model adapting unit is then adapted to adapt the object model based on the information provided by the secondary information, for instance, based on the probability map, the position of the view plane and the position of the landmark, wherein the influence of the information on the adaptation process can be based on a confidence score associated with each part of the information provided by the secondary information. In a preferred embodiment, the secondary information comprises information on a position of at least one landmark and further comprises a probability map, wherein the object model adapting unit is adapted to adapt the object model based on the information on the position of the landmark, the probability map, and the image. In particular, the object model adapting unit is adapted to use a model-based segmentation algorithm that is adapted to use the information on the position of the at least one landmark for determining an initial position of the object model in the image and to use the probability map and the image to adapt the shape of the initially positioned object model to the object in the image. Preferably, in this embodiment the object refers to a human spine.

In an embodiment, the artificial neural network comprises a first part adapted to determine a region of interest in the image, and a second part adapted to determine the secondary information based on the image and the determined region of interest. Preferably, the first part of the artificial neural network is adapted to determine the region of interest in the image based on the image, wherein the image is provided with a lower resolution than the provided image generally encompasses. This allows for a very fast determination of the region of interest in the image. The second part of the artificial neural network is then adapted to determine the secondary information based on the full resolution of the provided image by taking into account the region of interest. Thus, the secondary information can be determined with a high resolution in the determined region of interest very fast, since the artificial neural network already knows for which voxels of the image it has to determine the secondary information. This embodiment, can be regarded as an example for a realization of the concept of hierarchical receptive fields as described above. Generally, the first and the second part of the artificial neural network can be regarded as forming one artificial neural network or can also be regarded as two separate neural networks working together by providing the output of one neural network as input for the other neural network.

In another aspect of the present invention, an imaging system is presented, wherein the imaging system comprises a) an imaging unit for acquiring an image of an object, b) an image segmentation apparatus as described above, and c) a display unit for displaying the image together with the adapted object model as segmented image. The imaging unit is preferably a medical imaging unit like an x-ray CT system, magnetic resonance tomography system, fluoroscopy imaging system, et cetera.

In another aspect of the present invention, an image segmentation method for segmenting an object in an image is presented, wherein the method comprises a) providing an image of the object, b) providing an object model referring to a deformable surface model of the object for being adapted to the surface of the object shown in the image, c) providing an artificial neural network being adapted to determine secondary information on the object based on the image of the object, wherein the secondary information is indicative of a position and/or shape of the object in the image, d) determining the respective secondary information based on the image and the artificial neural network, and e) adapting the object model to the object in the image for segmenting the object, wherein the adaptation of the object model is based on the secondary information and on the image.

In another aspect of the present invention, a computer program for segmenting an object in an image is provided, wherein the computer program comprises program code means for causing the apparatus as described above to carry out the steps of the method as defined above when the computer program is executed by the apparatus.

It shall be understood that the image segmentation apparatus of claim 1, the imaging system of claim 13, the image segmentation method of claim 14, and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily an embodiment of an imaging system comprising an image segmentation apparatus according to the invention,
Fig. 2 shows a flowchart exemplarily illustrating an embodiment of an image segmentation method according to the invention,
Figs. 3, 4 and 5 illustrate the segmentation of an object in an image in accordance with the invention, and
Figs. 6 and 7 illustrate segmentation results provided by the image segmentation apparatus.

### DETAILED DESCRIPTION OF EMBODIMENTS

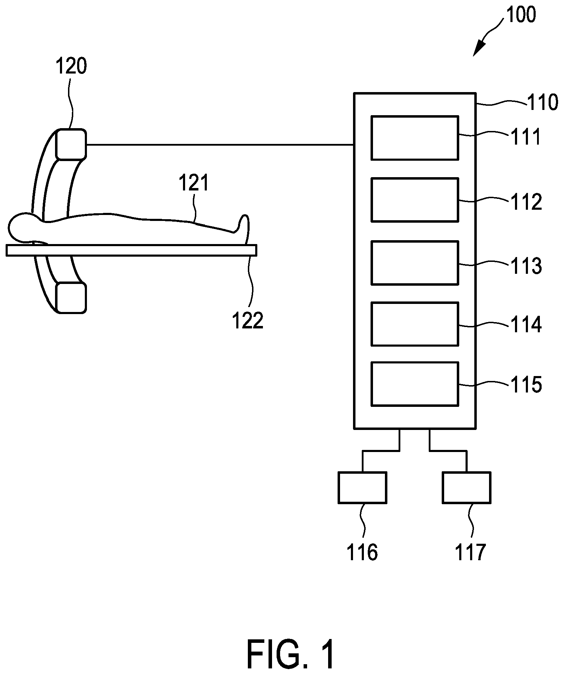

Fig. 1 shows schematically and exemplarily an embodiment of an imaging system comprising an image segmentation apparatus for segmenting an object in an image. In this embodiment the imaging system 100 comprises an imaging unit 120, for instance, an x-ray CT imaging unit, for acquiring an image of a region of interest of a patient 121 lying on a patient table 122. The image of the patient 121 acquired by the imaging unit 120 comprises an object referring to an anatomical structure that should be segmented within the image.

For segmenting the object in the image the imaging system 100 comprises the image segmentation apparatus 110. The image segmentation apparatus 110 comprises an image providing unit 111, an object model providing unit 112, an artificial neural network providing unit 113, a secondary information determination unit 114 and an object model adapting unit 115. Further, the image segmentation apparatus 110 can comprise an input unit 116 like a mouse or a keyboard and/or a display unit 117, for instance, for displaying the results of the image segmentation.

The image providing unit 111 is adapted in this example to provide the image of the object acquired using the imaging unit 120, for instance, by receiving the image from the imaging unit 120 and providing the received image. The image providing unit can then be adapted to show the image on the display unit 117 such that a user can select an object, in particular, an anatomical structure, in the image, for instance, by using the input unit 116 to click on the object in the image or by typing the name of the object in the image. However, the object can also be predetermined, i.e. can be always the same object, or can also be automatically selected, for instance, based on additional information like the reason for the image examination of the patient 121, known symptoms of the patient 121, past examinations, results of past examinations, etc.

Based on the selected object the object model providing unit 112 can then provide a deformable surface model as object model of the object. In particular, the object model providing unit can be adapted to use a database in which a plurality of deformable surface models of different objects is stored to select a deformable surface model referring to the object that should be segmented in the image. However, if the object is predetermined, for instance, referring always to the same object, the object model providing unit 112 can be adapted to provide also a predetermined object model. Moreover, the object model providing unit 112 might present possible object models to a user, for instance, via display 117, wherein the user can then select the object model. In these examples the object model can be provided by the object model providing unit 112 without any interaction with the image providing unit 111. Preferably, the object model is provided in form of a smooth triangulated surface mesh model of the object.

The artificial neural network providing unit 113 is then adapted to provide an artificial neural network. The artificial neural network providing unit 113 can be adapted to select the artificial neural network that refers to the object selected in the image from a database containing a plurality of different neural networks automatically or based on a user input. However, the artificial neural network providing unit 113 can also be adapted to always provide the same predetermined neural network.

The provided artificial neural network is adapted to determine secondary information based on the image, wherein the secondary information is indicative of a position and/or a shape of the object in the image. In particular, the artificial neural network is adapted to take image characteristics reflecting a global anatomical context of the object into account when determining the secondary information. The secondary information being indicative of a position and/or shape of the object in the image can refer, for instance, to a probability map providing information for each part of the image indicating whether the part of the image belongs to the object or a predetermined object class, to a position of a predetermined view plane in the image and/or to information on the position of at least one predetermined landmark of the object. For determining the secondary information, preferably, a fully convoluted neural network is provided. An example of a structure of such a fully convolutional neural network that can be used for determining probability maps for predetermined object classes from medical images can be found, for instance, in the article "U-Net: Convolutional Networks for Biomedical Image Segmentation" by O. Ronneberger et al., Medical Image Computing and Computer-Assisted Intervention - MICCAI 2015, Lecture Notes in Computer Science, volume 9351, pages 234 to 241 (2015). However, also other forms of neural networks can be used and trained for providing the secondary information based on the provided image while taking into account image characteristics reflecting a global anatomical context of the object.

In the here described preferred embodiment, the artificial neural network is further adapted to determine a confidence score for the secondary information based on the image of the object. For instance, if the secondary information comprises a probability map the artificial neural network is adapted to determine a confidence score for each voxel of the probability map indicating the confidence in the result of the object classification.

The secondary information determination unit 114 is then adapted to determine the respective secondary information and the confidence score for the secondary information by providing the image to the provided artificial neural network, wherein the artificial neural network provides as result the secondary information and optionally the confidence score.

The object model adapting unit 115 is then adapted to use model based segmentation techniques for adapting the object model to the object in the image based on the secondary information and on the image. Moreover, the object model adapting unit 115 can be adapted to optionally use the confidence score to determine how strongly the secondary information is taken into account when adapting the object model with respect to the image. For example, the confidence score can be provided as a value between 0 and 1, wherein a value of 0 indicates the secondary information is totally unreliable and a value of 1 indicates that the secondary information is completely reliable. In such a case, the confidence score for a voxel of the probability map can be regarded as low, if it is smaller than a threshold, for instance, being 0.5. For such a confidence score the object model adapting unit 115 can be adapted to ignore the secondary information for this voxel when adapting the object model. Further, the confidence score can be regarded as high, when it is higher than a threshold, for instance, higher than 0.75. The object model adapting unit 115 can then be adapted to mainly relay on the secondary information for this voxel when adapting the object model.

Generally, thresholds can be provided for the confidence score, that determine how the object model adapting unit 115 will use the secondary information during the adaptation of the object model based on whether a confidence score is above or below the respective threshold. Preferably, the confidence score can be used to determine weights that are used for weighting the secondary information and the information provided by the image when adapting the object model. In particular, a low confidence score, for instance, a confidence score beneath a predetermined threshold, like 0.5, can result in a low weight for the secondary information such that in this case the adaptation of the object model is mainly based on the information provided by the image and not provided by the non-confident secondary information. If the confidence score is high, for instance, above a predetermined threshold, like 0.75, the weight can be chosen such that during the adaption of the object model the secondary information and the information of the image are taken into account with the same priority or such that the secondary information is even prioritized over the information provided by the image.

In one example, object model adapting unit 115 is adapted to use a model based segmentation algorithm comprising energy or force terms for deforming the object model that attract a surface of the object model to a point in the image or punish a deformation of the object model in predetermined areas, wherein the object model is then adapted, i.e. placed and deformed, based on the development of an equilibrium between the different energy or force terms. In this case, the secondary information can be provided as additional energy or force term attracting the object model to a position or shape of the object provided by the secondary information, wherein this energy or force term can then be provided with a weight as described above. However, the secondary information can also be incorporated in other mathematical forms into a model based segmentation algorithm. For example, secondary information can be additionally or alternatively be used for placing and aligning the object model to the object in the image in a first step wherein then the deformation of the object model is carried out with or without taking the secondary information into account.

After the object model adapting unit 115 has adapted the object model to fit the object in the image as described above, the results of the segmentation, e.g. the adapted object model, can be displayed on the display unit 117. A user can then, for instance, confirm the results of the segmentation or can reject the results of the segmentation, wherein in case of a rejection the object model adapting unit can change, for instance, the weights of the secondary information with respect to image information to again perform an object model adaptation with the new weights.

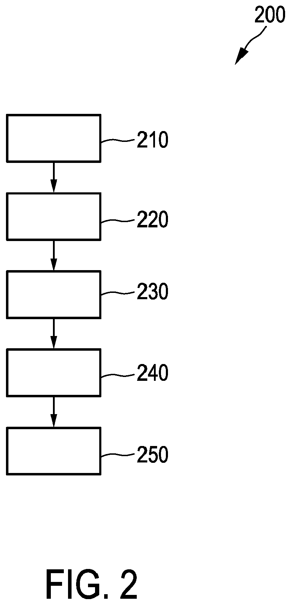

Fig. 2 shows schematically and exemplarily an embodiment of an image segmentation method according to the invention. The image segmentation method 200 comprises a first step 210 of providing an image of the object, for instance, an image acquired using the imaging unit 120. Further, the method 200 comprises a step 220 of providing a deformable surface model of the object, for instance, based on a selected object that should be segmented in the image. Moreover, the method 200 comprises a step 230 of providing an artificial neural network that is adapted to determine secondary information based on the image, wherein the secondary information is indicative of a position and/or shape of the object in the image. In particular, the artificial neural network is adapted to determine a secondary information by taking into account image characteristics reflecting a global context of the object. Generally, the step 210 of providing an image of the object, the step 220 of providing a deformable surface model, and the step 230 of providing an artificial neural network can be performed in any order or even at the same time. Based on the provided artificial neural network in a step 240 the respective secondary information is determined by providing the image to the artificial neural network. In a last step 250 the object model is adapted to the object in the image for segmenting the object, wherein the adaptation of the object model is based on the secondary information and on the image provided in steps 240 and 210, respectively.

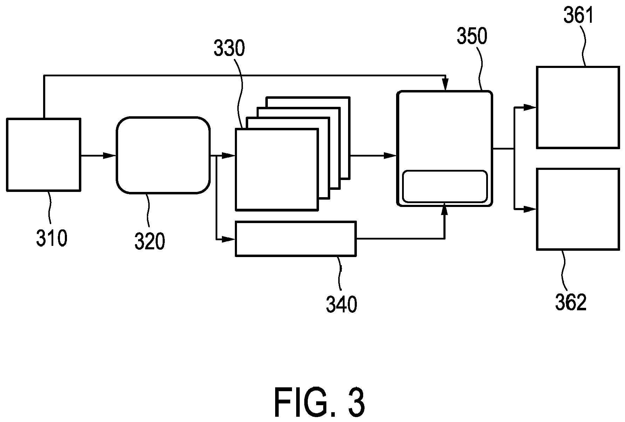

In the following the principles of the invention will be explained in more detail with respect to Figs. 3 to 5. Generally, model based segmentation algorithms using, for instance, smooth triangulated surface meshes as shaped prior, i.e. as object model, can be used for segmenting anatomical structures in medical images. However, model based segmentation algorithms are only based on the local image characteristics, i.e. the local grey values, around the segmented object and do not take a global anatomical context of the surrounding tissue into account. This can lead the algorithm to adapting the model to wrong boundaries, i.e. to boundaries not belonging to the object in the image. In comparison to such model based segmentation algorithms, neural network based approaches, for instance, U-net shaped neural networks, can be used for segmentation and are adapted to take the global anatomical context of the image that should be segmented into account, for instance, by using a hierarchy of receptive fields. However, the neural network approaches commonly do not incorporate prior shape knowledge which might lead to none smooth or leaking segmentation results. Thus, both approaches can lead to inaccurate segmentation results.

The invention as discussed above solves this problem by using a neural network to generate secondary information, for instance, context based feature maps, like probability maps, which preferably take the global anatomical information of the image into account and which can be used in addition to the image data as input for a model based segmentation algorithm. By further estimating the confidence of the secondary information, the responses of the model based segmentation algorithm to the secondary information with respect to the information provided by the image can be balanced to achieve a high accuracy of the segmentation. By incorporating the secondary information acquired using artificial neural networks into the model based segmentation algorithm framework, global anatomical context information can be integrated into the local adaption technique of the model based segmentation algorithm which leads to a more robust and accurate segmentation result.

In particular, the image segmentation apparatus can, based on the invention as described above, take global anatomical context information into account during the adaptation of the object model to the object in the image by providing an artificial neural network that is adapted to determine secondary information indicative of a position and/or shape of the object in the image. The secondary information can be provided to the object model adapting unit carrying out a model based segmentation algorithm for adapting the object model to the object in order to assist the locally working model based segmentation algorithm. To enable balancing of the secondary information at inference time, the artificial neural network can further be adapted to provide a confidence score for each secondary information. Examples for such confidence scores and the neural networks that provide these confidence scores are given, for instance, in the articles "Learning Confidence for Out-of-Distribution Detection in Neural Networks" by T. DeVries et al., arXiv preprint, arXiv: 1802.04865 (2018) and "What Uncertainties Do We Need in Bayesian Deep Learning for Computer Vision?" by A. Kendall et al., 31st Conference on Neural Information Processing Systems (NIPS 2017), pages 5580 to 5590 (2017). Such a confidence score can, in particular, be used for weighting the importance of the associated secondary information during the adaption of the object model. In different words, the confidence score allows full dynamic prioritization of the secondary information and the image information during the object model adaption process. This allows to improve the overall performance of the segmentation process.

An exemplary illustration of an embodiment of an overall process in accordance with the invention is shown in Fig. 3. An image 310 provided, for instance, by the image providing unit 111 is provided to an artificial neural network 320. The artificial neural network 320 is adapted to determine secondary information330, comprising, for instance, a probability map, a positon of a landmark of the object, and/or a position of a view plane predefined in the object model. Moreover, the artificial neural network 320 is adapted to provide confidence scores 340 for each secondary information 330. The secondary information 330, the confidence scores 340 and the image 310 are then provided to a model based segmentation algorithm 350 using a dynamic information prioritization that is based on the confidence scores. For instance, high confidence scores, i.e. confidence scores above a predetermined threshold, can cause the model based segmentation algorithm 350 to mainly rely on the secondary information as prior knowledge. In a case in which the artificial neural network 320 outputs a low confidence score, i.e. a confidence score below a predetermined threshold, the model based segmentation algorithm 350 can, for instance, be adapted to ignore the associated secondary information 330 and to rely completely on the image 310. Alternatively, the model based segmentation algorithm 350 can be adapted in this case to only use the secondary information 330 to mask out regions in the image 310 that should be labeled as invalid during the adaption process of the object model. The model based segmentation algorithm 350 can then provide as result the final adapted object model 361 and/or the complete segmented image 362.

In one embodiment, a fully convolutional neural network is used in order to generate segmentation probability maps of the object in the image. For instance, the fully convolutional neural network can refer to a U-net architecture with hierarchical receptive fields that allows to take the global context of the object in the image into account. As secondary information the neural network can provide, for instance, probability maps that are associated with confidence scores. These probability maps are then used as secondary information and provided to the model based segmentation algorithm used, for instance, by the object model adapting unit 115 together with the originally provided image. Parameters, i.e. weights, of the model based segmentation algorithm can be used for regulating the importance weighting of the different inputs, for instance, the input image and the additional secondary information, like the probability map, and can be adjusted in accordance with the confidence scores provided by the neural network. A high confidence score can in this case imply a high prioritization of the associated probability map taking, for instance, the form of a binary mask indicating that a voxel belongs to the object or not during the object model adaptation process.

In an additional or alternative embodiment, a set of meaningful anatomical landmarks can be defined for the object and their spatial position can be correlated with the object model. A neural network can be used to estimate a positon and/or shape of the anatomical landmarks along with a confidence score for each landmark based on the image. Specific parts of the object model can then be forced to follow the secondary information comprising the information on the landmarks during the adaptation of the object model based on the image. In particular, specific parts of the object model can be forced during the adaptation of the object model to adapt to these landmarks and the strength of this force of adaptation can be adjusted according to the confidence score of the associated landmark. Landmarks provided with a low confidence score can, for instance, be considered as not being trustworthy and the associated force used during the object model adaptation can be chosen very small in order to minimize the impact of the untrustworthy landmark on the model adaptation. A high confidence score of an associated landmark, for instance, a confidence score above a predetermined threshold, can result in a higher force such that the landmark has a stronger impact on the adaptation process, for instance, by dragging the model adaptation to the position or shape of anatomical landmarks considered as being trustworthy.

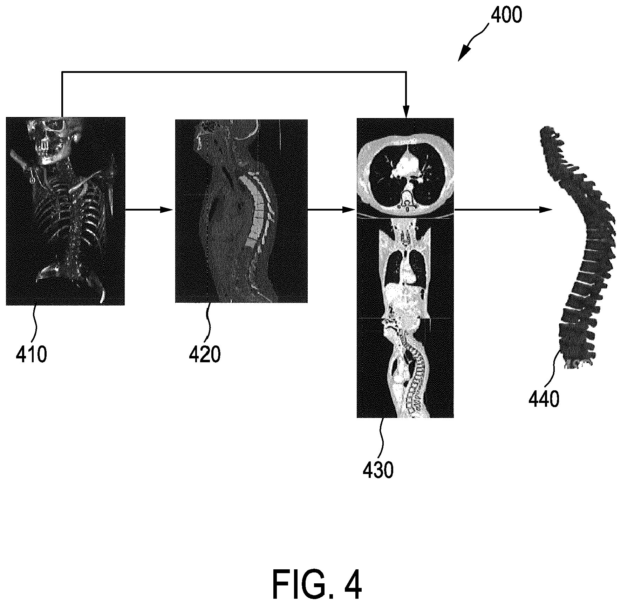

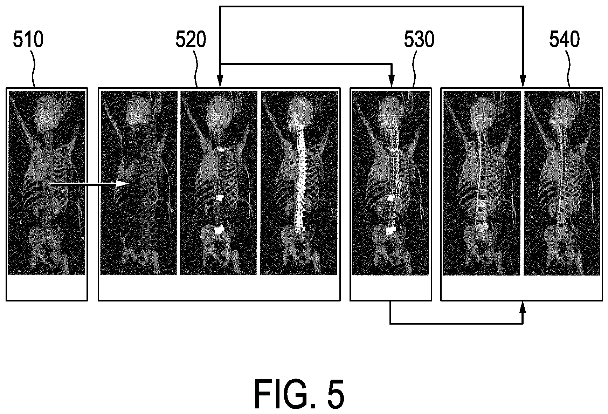

Figs. 4 and 5 show some exemplary illustrations of the processes described above with respect to an embodiment in which the object that should be segmented refers to a human spine. In the general, exemplarily process 400 shown in Fig. 4, first an original image 410 of a human torso is provided. The image in this case is acquired using an x-ray CT system. This three-dimensional image is then used as input to an artificial neural network, as defined above, which is adapted to determine as secondary information a multi class probability map 420 of the spine. The multi class probability map 420 is indicative of whether a voxel of the image 410 belongs to the spine or not and also to which of the vertebrae classes a voxel considered as belonging to the spine refers. The original image 410 and the multi class probability map 420 are then provided as input to a multimodal model-based segmentation algorithm using a deformable object model of the spine as shown schematically in image 430. The result of the algorithm taking into account the results of the neural network and the object model together with the information provided by the original image 410 is then shown in drawing 440 as resulting segmentation of the spine of the individual patient, i.e. as the adapted object model.

Fig. 5 shows the same general principles of the process described above in more detail. In the embodiment shown in Fig. 5, a first part of a neural network, which can also be considered as a first neural network, is used for a segmentation of the spine with a low resolution, for instance, a resolution of four millimeters. The result 510 of this segmentation can then be provided to a second part of the artificial neural network, which can also be regarded as a second artificial neural network. The second neural network then uses the first segmentation 510 of the first neural network to determine a region of interest and to provide a higher resolution segmentation, for instance, a segmentation with a resolution of two millimeters, of the spine together with confidence scores as shown exemplarily by the images in section 520, wherein the second image shown in this section refers to a probability map and the third image in this section refers to confidence scores of the probability map. The probability map and the confidence scores provided by the artificial neural network in section 520 can then be used optionally as input for a landmark detection module that can be part of the artificial neural network or which can be a standalone system using known landmark detections methods. The landmark detection module then detects predetermined landmarks, in this case the positions of the centers of each vertebra of a spine is shown in a section 530. The probability map, confidence score map and originally image are then provided to the model-based segmentation algorithm as indicated by section 540. Optionally also the landmark detection result 530 can be provided as input to the model-based segmentation algorithm, for instance, for placing, i.e. positioning, the object model during initialization of the algorithm. The result of the segmentation algorithm according to the above described principles is then shown as last image in section 540 of Fig. 5.

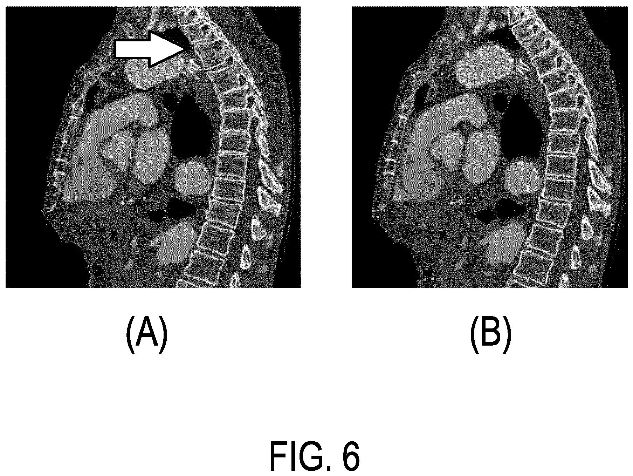

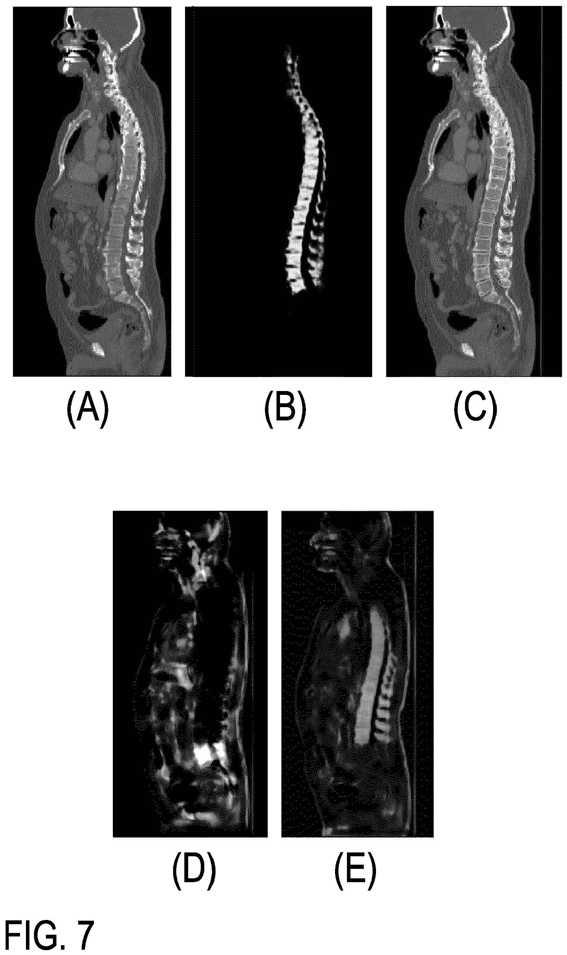

Figs. 6 and 7 show some additional exemplary applications of the above described principles of the invention. Fig. 6B shows what can go wrong if an object model is adapted to an image using known model-based segmentation algorithms. In this example, a spine model was adapted to a CT image to segment the vertebrae of a patient. The local appearance of the tissue transition from a bottom vertebra plate to the lower vertebra disc looks very similar to a transition from a vertebra disc to that of an adjacent vertebra. Consequently, the top and bottom plates of vertebrae can appear very similar to a model-based segmentation algorithm and can be mixed up during the adaptation. Such a mixing can be seen in Fig. 6A at the end of the arrow were two vertebrae are wrongly segmented as one vertebra. To show the impact of an image segmentation apparatus according to the invention on the segmentation, an artificial neural network being a fully convolutional neural network was trained to generate a probability map of the whole spine and to additionally provide a confidence score for the whole spine. In this case a confidence score for the whole spine probability map was high enough such that the probability map provided by the artificial neural network was used in addition to the normal image data in the model-based segmentation algorithm for the adaptation of the object model, wherein during the adaptation of the object model a high weight was provided to the probability map. In other words, the object model was for this case simultaneously adapted to the input CT image and the spine probability map. The result of the segmentation of the image segmentation apparatus according to the principles of the invention in this case is shown in Fig. 6B in which the previously wrongly segmented vertebrae are now clearly distinguished as two different vertebrae such that the segmentation accuracy is highly increased.

Additional examples for the working principle of the invention are shown in Fig 7. An input CT image of a spine is shown in Fig. 7A together with a spine probability map determined in accordance with the principles described above in Fig. 7B. Using the input CT image shown in image 7A and the spine probability map of Fig. 7B which was associated with a high confidence score resulted in a successful segmentation shown in Fig. 7C avoiding ambiguous image boundaries based on the additional spine probability map during the adaptation of the object model.

Fig. 7 shows additionally in images 7D and 7E other examples of probability maps that might be determined by using the artificial neural network. For instance, Fig. 7D shows a probability map of the vertebra L5. The probability map as shown in this figure clearly provides a good quality of the position and boundary of the vertebra L5 such that it can be associated with a high confidence score and can be incorporated into the model adaptation process with a high weight. In comparison to that, Fig. 7E shows a probability map of a T12 vertebra, wherein it can be clearly observed that in this case the probabilities are "smeared out" to the adjacent vertebrae and that thus a clear separation of the vertebra T12 to the other vertebrae is not possible based on the probability map. Therefore, for this example, the probability map as shown in Fig. 7E can be associated with a low confidence score and thus can be provided with a low weight or even can be ignored during the adaption of the object model.

General, the invention improves the performance of model-based segmentation approaches by utilizing dynamically weighted features which are generated by an artificial neural network. These additional features, i.e. secondary information, enable global anatomical context information to be taken into account into the locally working model-based segmentation algorithm. A dynamic confidence based reweighting can also improve the robustness of the overall procedure against failures of the neural network results. Moreover, the incorporation of the confidence scores weighting the artificial neural network results can improve the object model adaptation capability to complex anatomies even in the presence of very similar anatomical structures or a constrained view of the organ. For example, relying on the results of the artificial neural network, i.e. the secondary information, describing the global anatomical context of the object in the image reduces the ambiguous local appearance of image boundaries which may be confused by the classic model-based segmentation process.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the provision of the image, the provision of the deformable surface model, the provision of the artificial neural network, the determination of the secondary information, the adaptation of the object model, et cetera, performed by one or several units or devices can be performed by any other number of units or devices. These procedures can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to an apparatus for segmenting an object, e.g. anatomical structure, in an image, e.g. CT-image. The apparatus comprises a) an image providing unit, b) a model providing unit for providing a deformable surface model, c) an neural network providing unit for providing a neural network being adapted to determine secondary information being indicative of a position and/or shape of the object based on the image, d) a secondary information determination unit for determining the secondary information based on the image and the artificial neural network, e) an object model adapting unit for adapting the object model based on the secondary information and on the image. This allows to combine global information provided by the secondary information with local information provided by the image during the model based segmentation to increase the accuracy and reliability of the segmentation process.

## Claims

1. An image segmentation apparatus for segmenting an object in an image, wherein the apparatus (110) comprises:
an image providing unit (111) for providing an image (310) of the object,
a model providing unit (112) for providing an object model referring to a deformable surface model of the object for being adapted to the surface of the object shown in the image (310),
an artificial neural network providing unit (113) for providing an artificial neural network (320) being adapted to determine secondary information (330) on the object based on the image (310) of the object, wherein the secondary information (330) is indicative of a position and/or shape of the object in the image (310),
a secondary information determination unit (114) for determining the respective secondary information (330) based on the image (310) and the artificial neural network (320), and
an object model adapting unit (115) for adapting the object model to the object in the image (310) for segmenting the object, wherein the adaptation of the object model is based on the secondary information (330) and on the image (310).

2. The image segmentation apparatus according to claim 1, wherein the artificial neural network (320) is further adapted to determine a confidence score (340) for the secondary information (330) based on the image (310) of the object, wherein the confidence score (340) is indicative for how correctly the secondary information (330) indicates the position and/or shape of the object, wherein the secondary information determination unit (114) is further adapted to determining the confidence score (340) for the secondary information (330) based on the artificial neural network (320) and the image (310), wherein the object model adapting unit (115) is adapted to adapt the object model further based on the confidence score (340).

3. The image segmentation apparatus according to claim 2, wherein the object model adapting unit (115) is adapted to adapt the object model based on weighting information on the object provided by the secondary information (330) and the image (310), respectively, wherein the weights for weighting the information are determined based on the confidence score (340).

4. The image segmentation apparatus according to any of the preceding claims, wherein the secondary information (330) comprises a probability map, wherein the probability map provides information for each part of the image (310) indicative of whether the part of the image (310) belongs to the object.

5. The image segmentation apparatus according to any of the preceding claims, wherein the artificial neural network (320) is adapted to determine whether a part of an image (310) belongs to one of a plurality of predetermined object classes and to provide as part of the secondary information (330) a probability map providing information for each part of the image (310) indicative of to which object class this part of the image belongs.

6. The image segmentation apparatus according to any of the preceding claims, wherein the secondary information (330) comprises a position of at least one predetermined view plane indicative of a predetermined view of the object, wherein the position of the predetermined view plane is indicative of the position and/or shape of the object in the image (310).

7. The image segmentation apparatus according to any of the preceding claims, wherein the secondary information (330) is indicative of a position of at least one predetermined landmark of the object, wherein the landmark refers to a predetermined typical structure of the object.

8. The image segmentation apparatus according to any of claims 6 or 7, wherein the object model adapting unit (115) is adapted to adapt the object model by positioning the object model in the image (310) based on the at least one predetermined landmark and/or the position of the at least one predetermined view plane.

9. The image segmentation apparatus according to any of the preceding claims, wherein the artificial neural network (320) comprises a first part adapted to determine a region of interest in the image (310), and a second part adapted to determine the secondary information (330) based on the image (310) and the determined region of interest.

10. The image segmentation apparatus according to any of the preceding claims, wherein the object model adapting unit (115) is adapted to use a model based segmentation algorithm for adapting the object model to the object based on the secondary information (330) and the image (310).

11. The image segmentation apparatus according to any of the preceding claims, wherein the deformable object model is a smooth triangulated surface mesh model of the object.

12. The image segmentation apparatus according to any of the preceding claims, wherein the artificial neural network (320) is a convolutional neural network.

13. An imaging system (100) comprising:
an imaging unit (120) for acquiring an image (310) of an object,
an image segmentation apparatus (110) according to claim 1, and
a display unit (117) for displaying the image (310) together with the adapted object model as segmented image.

14. An image segmentation method for segmenting an object in an image, wherein the method (200) comprises:
providing (210) an image of the object,
providing (220) an object model referring to a deformable surface model of the object for being adapted to the surface of the object shown in the image,
providing (230) an artificial neural network being adapted to determine secondary information on the object based on the image of the object, wherein the secondary information is indicative of a position and/or shape of the object in the image,
determining (240) the respective secondary information based on the image and the artificial neural network, and
adapting (250) the object model to the object in the image for segmenting the object, wherein the adaptation of the object model is based on the secondary information and on the image.

15. A computer program for segmenting an object in an image, wherein the computer program comprises program code means for causing the apparatus of claim 1 to carry out the steps of the method as defined in claim 14 when the computer program is executed by the apparatus.
